# FASCICULE DE BREVET EUROPEEN

(11) **EP 3 417 537 B1**
(45) Date de publication et mention de la délivrance du brevet: **01.04.2020**
(21) Numéro de dépôt: 17707485.3
(22) Date de dépôt: 14.02.2017
(51) Int. Cl.: H02M 3/335, H02H 1/00, H02H 7/12

(54) **CONVERTISSEUR DC/DC ISOLE**
ISOLIERTER GLEICHSTROM-GLEICHSTROM-UMRICHTER
INSULATED DC/DC CONVERTER

(30) Priorité: 15.02.2016 FR 1651214
(43) Date de publication de la demande: 26.12.2018
(73) Titulaire: Valeo Siemens eAutomotive France SAS, 95800 Cergy (FR)
(72) Inventeur: DE SOUSA, Luis, KT34JL New Malden (GB)
(74) Mandataire: Argyma
(86) Numéro de dépôt international: PCT/EP2017/053285
(87) Numéro de publication internationale: WO 2017/140672

(56) Documents cités:
- US-A1- 2014 177 283
- US-B1- 8 456 867

## Description

La présente invention concerne un convertisseur DC/DC isolé.

Les convertisseurs DC/DC (pour « direct current/direct current » en anglais ou courant continu) isolés peuvent présenter des commutations à zéro de tension ou ZVS (pour « zero voltage switching » en anglais) ou des commutations à zéro de courant ou ZCS (pour « zero current switching » en anglais) qui permettent de réduire les pertes par commutation lors de la conversion de tension. Ces convertisseurs sont donc particulièrement avantageux dans une application automobile où la ressource en énergie est limitée. Dans un véhicule, on peut utiliser un convertisseur de tension pour adapter des niveaux de tension entre plusieurs réseaux électriques du véhicule ou pour convertir une tension entre une source d'énergie et un consommateur électrique embarqué dans le véhicule.

On connait un convertisseur DC/DC isolé du brevet US5754413, illustré en figure 1. Le convertisseur comprend deux interrupteurs Q1, Q2 qui sont connectés en leur point milieu à une branche qui comprend deux transformateurs T, T' en série. Le convertisseur est agencé en demi-pont. Les interrupteurs Q1, Q2 contrôlent la transmission d'énergie à travers les transformateurs T, T' pour obtenir une conversion d'une tension d'entrée Ue du convertisseur en une tension de sortie Uout. Des diodes D1, D2 connectées aux secondaires des transformateurs permettent de redresser le signal de sortie. La tension de sortie Uout est obtenue en contrôlant le rapport cyclique alpha des interrupteurs. Sur une première partie d'une période de fonctionnement, le premier interrupteur QA1 est fermé et le deuxième interrupteur QA2 est ouvert ; la diode D2 est bloquée alors que la diode D1 est passante. Sur une deuxième partie de la période de fonctionnement, le premier interrupteur QA1 est ouvert et le deuxième interrupteur QA2 est fermé ; la diode D1 est bloquée alors que la diode D2 est passante.

Sur chaque partie de la période de fonctionnement, la diode qui est bloquée voit une chute de tension. Cependant, on n'est pas assuré que cette chute de tension soit égale d'une partie sur l'autre. Une diode de l'étage de redressement peut donc subir une chute de tension plus importante que l'autre diode, ce qui peut entrainer un surdimensionnement des deux diodes pour être certain que chacune peut tenir la chute de tension. Les diodes D1, D2 peuvent être remplacées par des interrupteurs, comme des MOSFETs par exemple, que l'on commande de manière synchrone pour diminuer la chute de tension. Ce déséquilibre sur la chute de tension contraint le choix sur des interrupteurs ayant une tension de blocage plus importante, mais avec une résistance de conduction d'autant plus élevée.

Le brevet US 8 456 867 concerne une alimentation électrique en mode commuté, SMPS, isolée, comprenant : un contrôleur de commutation (230) servant à générer des signaux de contrôle de commutation de démarrage pendant le démarrage de la SMPS isolée (200), et des signaux de contrôle de commutation opérationnels de période T pendant le fonctionnement ultérieur de la SMPS isolée (200); un transformateur (110) ayant un enroulement primaire (111); et un circuit de pilotage en pont complet agencé pour piloter l'enroulement primaire (111) du transformateur en réponse aux signaux de contrôle de commutation. Le circuit de pilotage en pont complet a : un premier élément de commutation (Q2); un circuit pilote d'amorce (120) agencé pour commuter le premier élément de commutation (Q2) en réponse aux signaux de contrôle de commutation, le circuit pilote d'amorce ayant un condensateur d'amorce; et un second élément de commutation (Q4) connecté au premier élément de commutation (Q2) et au circuit pilote d'amorce (120), et agencé pour conduire un courant pour charger le condensateur d'amorce quand il est activé en réponse aux signaux de contrôle de commutation. Le contrôleur de commutation (230) sert à démarrer la SMPS isolée.

Il est donc recherché un convertisseur DC/DC isolé comprenant un composant magnétique permettant de transférer de l'énergie d'une partie primaire vers une partie secondaire et de stocker de l'énergie au niveau de la partie primaire, et dans lequel la chute de tension subie par un composant de redressement de l'étage de redressement est diminuée par rapport à l'art antérieur.

A cet effet, il est proposé un convertisseur DC/DC isolé comprenant :
- un composant magnétique ayant une partie primaire et une partie secondaire séparées par une barrière d'isolation électrique ;
- des interrupteurs, dits interrupteurs côté primaire, reliés à la partie primaire du composant magnétique de sorte que des commutations des interrupteurs côté primaire avec un rapport cyclique sur des périodes de modulation permettent au composant magnétique de transférer de l'énergie de la partie primaire vers la partie secondaire et de stocker de l'énergie au niveau de la partie primaire, pour convertir une tension d'entrée du convertisseur DC/DC isolé en une tension de sortie; et
dans lequel la partie secondaire du composant magnétique comprend un premier et un deuxième bras, chaque bras comportant un premier interrupteur, un secondaire et un deuxième interrupteur en série ; un point intermédiaire du secondaire du premier bras, dit premier secondaire, étant connecté à un point intermédiaire du secondaire du deuxième bras, dit deuxième secondaire.

En particulier, le composant magnétique permet de transférer de l'énergie de la partie primaire vers la partie secondaire tout en stockant de l'énergie au niveau de la partie primaire, c'est-à-dire en même temps.

Par rapport à l'art antérieur, la chute de tension est répartie sur deux interrupteurs au lieu d'un seul. La chute de tension vue par un interrupteur dans la partie secondaire du convertisseur DC/DC isolé est deux fois moins élevée que dans un convertisseur de l'art antérieur, ce qui diminue la tension de blocage nécessaire pour les interrupteurs de la partie secondaire et donc leur résistance de conduction. Les pertes par conduction dans la partie secondaire sont donc diminuées par rapport à l'art antérieur. Les interrupteurs permettent de contrôler les courants circulant dans la partie secondaire. En reliant les points intermédiaires des secondaires, on s'assure que, lorsque les interrupteurs d'un bras sont ouverts, le potentiel au niveau du point intermédiaire de ce bras est imposé par le point intermédiaire de l'autre bras. Ainsi, on peut contrôler la tension entre le point intermédiaire du bras considéré et les extrémités du bras, et donc la tension aux bornes des interrupteurs ouverts.

Selon un mode de réalisation, le composant magnétique transfère de l'énergie vers un des deux secondaires en fonction de la tension appliquée au niveau de la partie primaire.

Selon un mode de réalisation, le composant magnétique est configuré de sorte que :
- sur une première partie d'une période de modulation, une première partie de la partie primaire transfère une énergie vers le premier secondaire, et une deuxième partie de la partie primaire réalise une inductance stockant de l'énergie ;
- sur une deuxième partie de la période de modulation, la deuxième partie de la partie primaire transfère une énergie vers le deuxième secondaire, et la première partie de la partie primaire réalise une inductance stockant de l'énergie.

Selon une variante, les interrupteurs du premier bras sont configurés pour être passants sur la première partie de fonctionnement et ouverts sur la deuxième partie de fonctionnement ; et les interrupteurs du deuxième bras sont configurés pour être passants sur la deuxième partie de fonctionnement et ouverts sur la première partie de fonctionnement.

Selon un mode de réalisation, dans chaque bras de la partie secondaire, les interrupteurs sont configurés pour être simultanément dans un même état et pour être dans un état différent de celui des interrupteurs de l'autre bras.

Selon un mode de réalisation, les extrémités des bras de la partie secondaire sont reliées entre elles, une première extrémité étant destinée à être connectée à la masse de la partie secondaire, une deuxième extrémité étant destinée à être connectée à la sortie du convertisseur de tension.

Selon un mode de réalisation, lesdits secondaires du composant magnétique sont non couplés magnétiquement entre eux, lesdits secondaires étant couplés magnétiquement à la partie primaire.

Selon un mode de réalisation, les interrupteurs côté primaire sont configurés pour fonctionner avec un rapport cyclique sensiblement constant ; ledit convertisseur DC/DC isolé comprenant au moins un autre interrupteur configuré pour contrôler la tension de sortie du convertisseur DC/DC isolé en contrôlant la tension délivrée par lesdits interrupteurs côté primaire.

Selon un mode de réalisation, les interrupteurs côté primaire sont configurés de sorte que leur rapport cyclique est sensiblement égal à 50%.

Selon un mode de réalisation, le convertisseur comprend un détecteur de court-circuit, configuré pour :
- détecter un court-circuit d'un desdits interrupteurs côté secondaire dans la partie secondaire ;
- ouvrir l'autre interrupteur du bras côté secondaire auquel appartient l'interrupteur en court-circuit de manière à neutraliser ce court circuit.

L'invention sera mieux comprise en faisant référence aux dessins, dans lesquels :
- la figure 1 illustre un exemple de convertisseur DC/DC isolé selon l'art antérieur ;
- la figure 2 illustre un exemple de convertisseur DC/DC isolé selon l'invention ;
- la figure 3 illustre un premier état du convertisseur DC/DC isolé illustré en figure 2 lors de son fonctionnement ;
- la figure 4 illustre un deuxième état du convertisseur DC/DC isolé illustré en figure 2 lors de son fonctionnement ;
- la figure 5 illustre un exemple de détection de court circuit dans le convertisseur DC/DC isolé illustré en figure 2 ;
- la figure 6 illustre un autre exemple de convertisseur DC/DC isolé selon l'invention ;
- la figure 7 illustre un exemple de convertisseur DC/DC isolé selon l'invention ;
- la figure 8 illustre un autre exemple de convertisseur DC/DC isolé selon l'invention ;
- la figure 9 illustre un exemple de réalisation de la partie secondaire du composant magnétique dans un exemple de convertisseur DC/DC isolé selon l'invention.

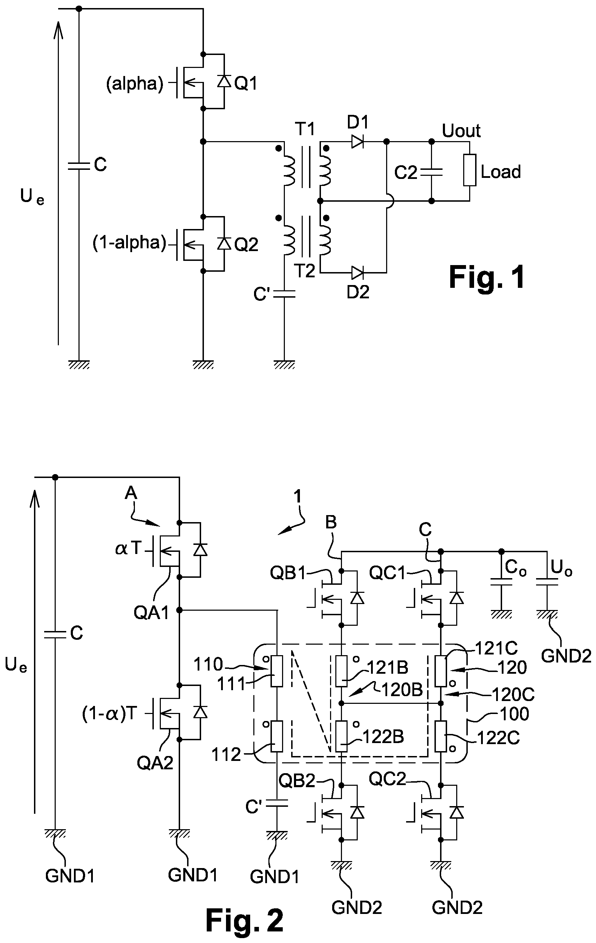

La figure 2 présente un exemple de convertisseur DC/DC isolé 1 selon un mode réalisation de l'invention.

Le convertisseur DC/DC isolé 1 comprend un composant magnétique 100 qui comporte une partie primaire 110 et une partie secondaire 120 séparées par une barrière d'isolation.

Le convertisseur DC/DC isolé 1 comprend un premier bras A connecté à la partie primaire 110 du composant magnétique 100. Le bras A comporte des interrupteurs QA1, QA2, en série. En particulier, une succession d'ouvertures et de fermetures des interrupteurs QA1, QA2 permet de convertir une tension d'entrée Ue du convertisseur DC/DC isolé 1 en une tension de sortie Uout du convertisseur DC/DC isolé 1. Notamment, un premier interrupteur QA1 est connecté à la borne haute d'une source de tension Ue. Un deuxième interrupteur QA2 est connecté à la borne basse de la source de tension Ue. Cette borne basse correspond notamment à une première masse GND1 du convertisseur DC/DC isolé 1.

Les commutations des interrupteurs QA1, QA2 avec un rapport cyclique α sur des périodes de modulation T permettent au composant magnétique 100 de transférer de l'énergie de la partie primaire 110 vers la partie secondaire 120 et de stocker de l'énergie au niveau de la partie primaire 110, pour convertir la tension d'entrée Ue du convertisseur DC/DC isolé 1 en une tension de sortie Uout. Le convertisseur DC/DC isolé 1 peut comprendre une capacité Cout pour filtrer le signal de sortie.

Notamment, le point milieu entre les deux interrupteurs QA1, QA2 du bras A côté primaire est connecté à une extrémité d'un bras qui comprend la partie primaire 110 du composant magnétique 100 en série avec une capacité C'. Notamment, ce bras est connecté à son autre extrémité à la masse GND1 de la partie primaire 110. Le convertisseur DC/DC isolé 1 pourrait se passer de cette capacité C'. La capacité C' permet de supprimer la composante continue du signal transmis par la partie primaire 110 vers la partie secondaire 120, notamment dans le cas d'une structure en demi-pont. La capacité C' peut être supprimée dans une structure en pont complet.

Dans la partie secondaire 120 du composant magnétique 100 un premier bras, dit premier bras côté secondaire B, comporte un premier interrupteur QB1, un secondaire 120B et un deuxième interrupteur QB2 en série. Un deuxième bras, dit deuxième bras côté secondaire C comporte un premier interrupteur QC1, un secondaire 120C et un deuxième interrupteur QC2 en série. Notamment, dans chaque bras B, C côté secondaire, le secondaire 120B, 120C est connecté en série entre le premier interrupteur QA1, QB1 et le deuxième interrupteur QA2, QB2. Notamment, les extrémités des bras B, C côté secondaire sont reliées entre elles, une première extrémité étant connectée à la masse GND2 de la partie secondaire, une deuxième extrémité étant destinée à être connectée à la sortie du convertisseur de tension.

Notamment, le composant magnétique 100 transfère de l'énergie vers un des deux secondaires 120B, 120C en fonction de la tension appliquée au niveau de la partie primaire 110. En particulier, à cet effet, les secondaires 120B, 120C du composant magnétique 100 sont non couplés magnétiquement entre eux, mais sont couplés magnétiquement à la partie primaire 110. Plus particulièrement, le secondaire 120B du premier bras B côté secondaire est couplé magnétiquement à une première partie 111 de la partie primaire 110 et le secondaire 120C du deuxième bras C est couplé magnétiquement à une deuxième partie 112 de la partie primaire 110.

Dans l'art antérieur illustré en figure 1, des diodes D1, D2 sont connectées au côté secondaire pour un redressement du signal issu des secondaires du composant magnétique. Dans le convertisseur DC/DC isolé 1, les diodes sont remplacées par les interrupteurs côté secondaire QB1, QB2, QC1, QC2. Pour conserver la fonction de redressement, les interrupteurs côté secondaire QB1, QB2, QC1, QC2 gardent un fonctionnement similaire à celui des diodes D1, D2. Autrement dit, les interrupteurs côté secondaire QB1, QB2, QC1, QC2 sont ouverts, respectivement fermés, sur des moments ou les diodes auraient eu un état ouvert, respectivement fermé. A cet effet, dans l'exemple de procédé, les interrupteurs QB1, QB2 du premier bras B côté secondaire prennent le même état, fermé ou ouvert, que le premier interrupteur QA1 du bras A côté primaire ; et les interrupteurs QC1, QC2 du deuxième bras C côté secondaire prennent le même état, fermé ou ouvert, que le deuxième interrupteur QA2 du bras A côté primaire. En particulier, dans chaque bras B, C côté secondaire, les interrupteurs QB1, QB2 ; QC1, QC2 sont configurés pour être simultanément dans le même état. Notamment, lors d'une conversion de tension par le convertisseur DC/DC isolé 1, les interrupteurs QB1, QB2 du premier bras B côté secondaire sont dans un état différent de celui des interrupteurs QC1, QC2 du deuxième bras C côté secondaire.

Les secondaires 120B, 120C sont connectés entre eux au niveau d'un point intermédiaire respectif. Autrement dit, les points intermédiaires du secondaire 120B du premier bras B côté secondaire et du secondaire 120C du deuxième bras C côté secondaire sont au même potentiel. Ceci est notamment réalisable en les reliant par un fil électrique. Le point intermédiaire du secondaire 120B du bras B définit donc une première partie 121B et une deuxième partie 122B du secondaire du bras B ; et le point intermédiaire du secondaire 120C du bras C définit donc une première partie 121C et une deuxième partie 122C du secondaire du bras C.

Dans cet exemple, les points intermédiaires sont les points milieux respectifs du secondaire 120B du premier bras B côté secondaire et du secondaire 120C du deuxième bras C côté secondaire. Autrement dit, les deux secondaires 120B, 120C sont connectés au niveau de leurs points milieu respectifs.

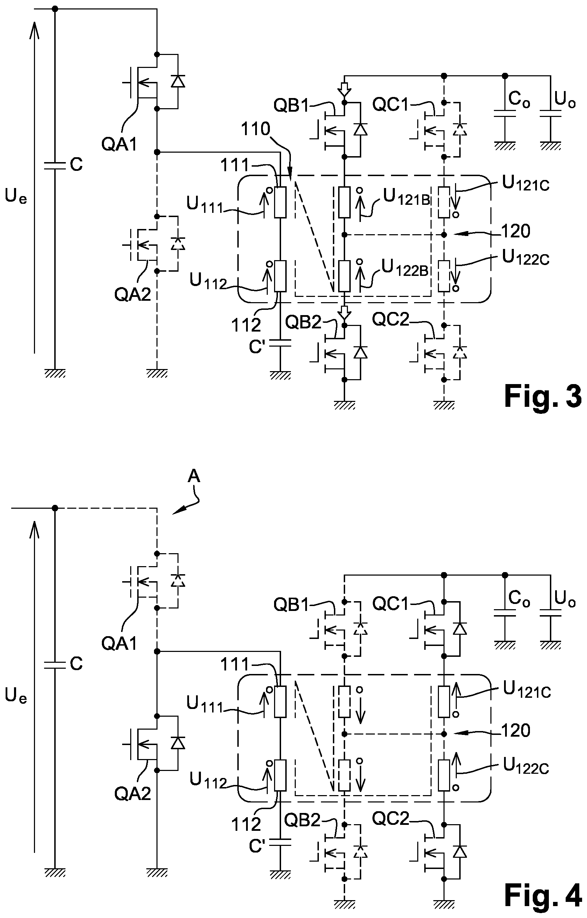

L'avantage de la partie secondaire 120 dans le convertisseur DC/DC isolé 1 sera mieux compris en décrivant un fonctionnement du convertisseur DC/DC isolé 1 en relation avec les figures 3 et 4.

Les interrupteurs QA1, QA2 du premier bras A côté primaire ont un rapport cyclique α sur une période de modulation T de façon à transférer une énergie à travers le composant magnétique 100. Les interrupteurs QA1, QA2 sont notamment commandés par une modulation de largeur d'impulsion sur la période T de modulation. Les durées de première et deuxième parties de fonctionnement sont définies par le rapport cyclique α des interrupteurs QA1, QA2.

Sur une première partie de fonctionnement illustrée en figure 3, de durée aT, c'est-à-dire sur une première partie de la période de modulation T, le premier interrupteur côté primaire QA1 est fermé et le deuxième interrupteur côté primaire QA2 est ouvert. La première partie de fonctionnement a une durée αT, où α est le rapport cyclique appliqué au premier interrupteur QA1 du bras A côté primaire et T la période de modulation. Sur la première partie de la période de fonctionnement, les interrupteurs QC1, QC2 du deuxième bras C côté secondaire sont ouverts alors que les interrupteurs QB1, QB2 du premier bras B côté secondaire sont fermés. Seule la première partie 111 de la partie primaire 110 peut donc transférer de l'énergie vers la partie secondaire 120. Ainsi, la deuxième partie 112 de la partie primaire 110 réalise une inductance stockant de l'énergie et la première partie 111 de la partie primaire 110 transfère une énergie vers le secondaire 120B du premier bras B côté secondaire. La deuxième partie 112 du composant magnétique 100 fonctionne comme une inductance, grâce notamment à une inductance magnétisante liée à la deuxième partie 112 de la partie primaire 100. La première partie 111 de la partie primaire 110 et le secondaire 120B du premier bras B côté secondaire réalisent deux inductances couplées par lesquelles l'énergie est transférée entre la partie primaire 110 et la partie secondaire 120.

Dans cette première partie, la tension aux bornes du bras de la partie primaire 110 est égale à la tension d'entrée Ue. Les interrupteurs QC1, QC2 du deuxième bras C côté secondaire étant ouverts, aucun courant ne circule dans le deuxième bras C côté secondaire. Les interrupteurs QB1, QB2 du premier bras B côté secondaire étant fermés, un courant peut donc circuler dans le premier bras B côté secondaire. La tension aux bornes du secondaire 120B du premier bras B côté secondaire est égale à la tension de sortie Uo. La tension U₁₁₁ aux bornes de la première partie 111 de la partie primaire 110 vaut donc N×Uo, où N est le rapport de transformation entre le secondaire 120B du premier bras B côté secondaire et la première partie 111 de la partie primaire 110. L'énergie aux bornes de la première partie 111 de la partie primaire 110 est transférée vers la partie secondaire 120, en particulier vers le secondaire 120B du premier bras B côté secondaire.

La tension U₁₁₂ aux bornes de la deuxième partie 112 de la partie primaire 110 est égale à Ue-N×Uo-Uc', où Uc' est la tension aux bornes de la capacité C'. La tension U₁₁₂ permet un stockage d'énergie au niveau de l'inductance magnétisante de la deuxième partie 112 de la partie primaire 110. Pour la compréhension de l'invention, on considère que le rapport de transformation entre la première partie 111 de la partie primaire 110 et le secondaire 120B du premier bras B côté secondaire et celui entre la deuxième partie 112 de la partie primaire 110 et le secondaire 120c du deuxième bras C côté secondaire sont les mêmes. Cependant, ces rapports de transformation pourraient être différents.

La tension U_{121B} aux bornes de la première partie 121B du secondaire 120B du premier bras B côté secondaire est égale à Uo/2, de même que la tension U_{122B} aux bornes de la deuxième partie 122B du secondaire 120B du premier bras B côté secondaire, en considérant la résistance Ron des interrupteurs QB1, QB2 comme négligeable. La tension U_{121C} aux bornes de la première partie 121C du secondaire 120C du deuxième bras C côté secondaire est égale à U₁₁₂/2N, de même que la tension aux bornes de la deuxième partie 122C du secondaire 120C du deuxième bras C côté secondaire. Etant donné que le point intermédiaire du secondaire 120C du deuxième bras C côté secondaire est connecté au point milieu du secondaire 120B du premier bras B côté secondaire, il ressort que la tension aux bornes du premier interrupteur QA1C du deuxième bras C côté secondaire est égale à la tension aux bornes du deuxième interrupteur QA2C du deuxième bras C côté secondaire. Ainsi, les chutes de tension aux bornes du premier interrupteur QA1C et du deuxième interrupteur du deuxième bras C côté secondaire sont égales. Ce qui permet une usure uniforme de ces interrupteurs QA1C, QA2C. En outre, la tension aux bornes de chacun des interrupteurs QA1C, QA2C est deux dois moindre que celle au bornes de la diode D2 dans l'art antérieur illustré en figure 1, car dans le convertisseur DC/DC isolé 1 de la figure 2, la chute de tension est répartie sur deux interrupteurs QA1C, QA2C.

Sur une deuxième partie de fonctionnement illustrée en figure 4, de durée (1-α)T, c'est-à-dire sur une deuxième partie de la période de modulation T, le premier interrupteur côté primaire QA1 est ouvert et le deuxième interrupteur côté primaire QA2 est fermé. Sur la deuxième partie de fonctionnement, les interrupteurs QC1, QC2 du deuxième bras C côté secondaire sont fermés alors que les interrupteurs QB1, QB2 du premier bras B côté secondaire sont ouverts. Seule la deuxième partie 112 de la partie primaire 110 peut donc transférer de l'énergie vers la partie secondaire 120. Ainsi, la première partie 111 de la partie primaire 110 réalise une inductance stockant de l'énergie, et la deuxième partie 112 de la partie primaire 110 transfère une énergie vers le secondaire 120C du deuxième bras C côté secondaire. La première partie 111 du composant magnétique 100 fonctionne comme une inductance grâce notamment à une inductance magnétisante liée la première partie 111 de la partie primaire 100. La deuxième partie 112 de la partie primaire 110 et le secondaire 120C du deuxième bras C côté secondaire réalisent deux inductances couplées par lesquelles l'énergie est transférée entre la partie primaire 110 et la partie secondaire 120.

Dans cette deuxième partie, la tension aux bornes du bras de la partie primaire 110 est nulle. Les interrupteurs QB1, QB2 du premier bras B côté secondaire étant ouverts, aucun courant ne circule dans le premier bras B côté secondaire. Les interrupteurs QC1, QC2 du deuxième bras C côté secondaire étant fermés, un courant peut donc circuler dans le deuxième bras C côté secondaire.

La tension aux bornes du secondaire 120C du deuxième bras C côté secondaire est égale à la tension de sortie Uo. La tension U₁₁₂ aux bornes de la deuxième partie 112 de la partie primaire 110 vaut donc N×Uo, où N est le rapport de transformation entre le secondaire 120C du deuxième bras C côté secondaire et la deuxième partie 112 de la partie primaire 110. L'énergie aux bornes de la deuxième partie 112 de la partie primaire 110 est transférée vers la partie secondaire 120, en particulier vers le secondaire 120C du deuxième bras C côté secondaire. La tension U₁₁₁ aux bornes de la première partie 111 de la partie primaire 110 est égale à -N×Uo-Uc', où Uc' est la tension aux bornes de la capacité C'. La tension U₁₁₁ permet un stockage d'énergie au niveau de l'inductance magnétisante de la première partie 111 de la partie primaire 110.

La tension U_{121C} aux bornes de la première partie 121C du secondaire 120C du deuxième bras C côté secondaire est égale à Uo/2, de même que la tension U_{122C} aux bornes de la deuxième partie 122C du secondaire du deuxième bras C côté secondaire, en considérant la résistance Ron des interrupteurs comme négligeable. La tension U_{121B} aux bornes de la première partie 121B du secondaire 120B du premier bras B côté secondaire est égale à U₁₁₁/2N, de même que la tension U_{122B} aux bornes de la deuxième partie 122B du secondaire 120B du premier bras B côté secondaire. Etant donné que le point intermédiaire du secondaire 120B du premier bras B côté secondaire est connecté au point milieu du secondaire 120C du deuxième bras C côté secondaire, il ressort que la tension aux bornes du premier interrupteur QA1B du premier bras B côté secondaire est égale à la tension aux bornes du deuxième interrupteur QA2B du premier bras B côté secondaire. Ainsi, les chutes de tension aux bornes du premier interrupteur QA1B et du deuxième interrupteur QA2B du premier bras C côté secondaire sont égales. Ce qui permet une usure uniforme de ces interrupteurs QA1B, QA2B. En outre, la tension aux bornes de chacun des interrupteurs QA1C, QA2C est deux dois moindre que celle au bornes de la diode D1 dans l'art antérieur illustré en figure 1, car dans le convertisseur DC/DC isolé 1 de la figure 2, la chute de tension est répartie sur deux interrupteurs QA1C, QA2C.

Ainsi, la chute de tension vue par un interrupteur QA1B, QA2B, QA1C, QA2C dans la partie secondaire 120 du convertisseur DC/DC isolé 1 est deux fois moins élevée que dans un convertisseur de l'art antérieur, ce qui diminue l'usure du convertisseur DC/DC isolé 1 par rapport à l'art antérieur.

Selon une variante, le point intermédiaire est différent du point milieu. Dans la première partie de fonctionnement, les chutes de tension aux bornes du premier interrupteur QA1C et du deuxième interrupteur QA2C du deuxième bras C côté secondaire ne sont pas égales, mais leur rapport reste constant sur les occurrences de la première partie de fonctionnement. De même, dans la deuxième partie de fonctionnement, les chutes de tension aux bornes du premier interrupteur QA1B et du deuxième interrupteur QA2B du premier bras B côté secondaire ne sont pas égales, mais leur rapport reste constant sur les occurrences de la deuxième partie de fonctionnement. Ceci peut être avantageux lorsque les premiers interrupteurs QA1B, QA1C côté secondaire peuvent supporter une tension plus importante que les deuxièmes interrupteurs QA2B, QA2C, ou inversement.

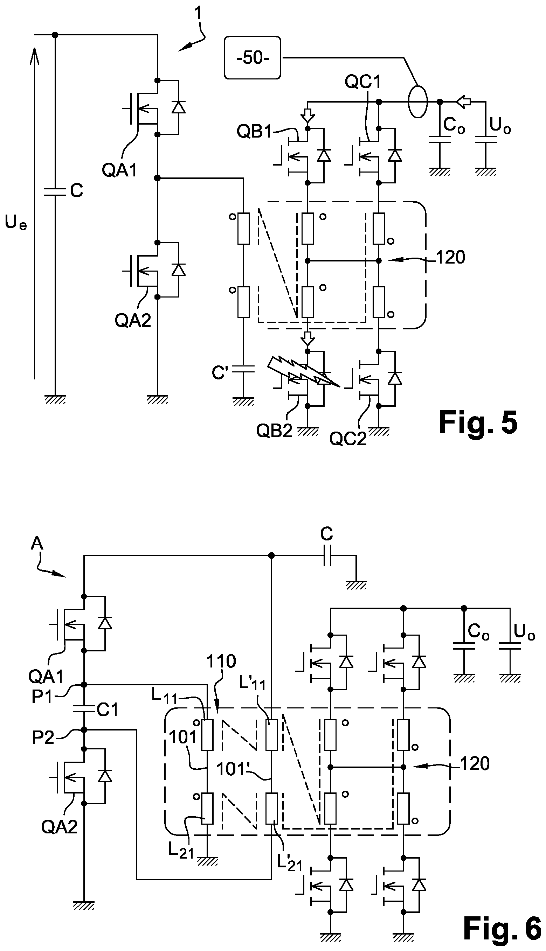

Dans le convertisseur DC/DC isolé 1, la partie secondaire 120 est par exemple adaptée pour mettre en position de sécurité le convertisseur DC/DC isolé 1 en cas d'une défaillance telle qu'un court-circuit interne au convertisseur DC/DC isolé 1. Dans un exemple illustré en figure 5, un détecteur 50 détecte un court-circuit dans la partie secondaire 120, notamment en mesurant un courant délivré en sortie de la partie secondaire 120. Lorsqu'un court circuit est détecté, par exemple, sur un interrupteur QA2B de la partie secondaire 120. L'autre interrupteur QA1B du bras B correspondant peut être commandé en ouverture de manière à neutraliser ce court circuit. Ainsi un état sécuritaire du convertisseur DC/DC isolé 1 est facilement obtenu.

Le composant magnétique 100 pourrait comprendre plusieurs bras dans la partie primaire 110 auxquels le bras A côté primaire serait connectés. La figure 6 illustre un exemple dans lequel la partie primaire 110 comporte plusieurs circuits primaires. Une première capacité C1 est en série avec les deux interrupteurs QA1, QA2 du premier bras A côté primaire et située entre les deux interrupteurs QA1, QA2. Ainsi, la première capacité C1 a une première borne connectée au premier interrupteur QA1 au niveau d'un point de connexion P1, et une deuxième borne connectée au deuxième interrupteur QA2 au niveau d'un deuxième point de connexion P2. Notamment, la première capacité C1 est connectée au premier interrupteur MA1 au niveau de l'électrode de source du premier interrupteur QA1, et elle est connectée au deuxième interrupteur QA2 au niveau de l'électrode de drain du deuxième interrupteur QA2. En particulier, le composant magnétique 100 comporte un premier circuit primaire 101, un deuxième circuit primaire 101' séparés entre eux par des barrières d'isolation électrique. Notamment, le premier circuit primaire 101 forme une branche dont une extrémité est connectée au premier point de connexion P1 et dont l'autre extrémité est connectée à une borne extrémale, dite deuxième borne extrémale, du premier bras A coté primaire. La deuxième borne extrémale correspond à la borne du deuxième interrupteur QA2 qui n'est pas connectée à la première capacité C1. Et le deuxième circuit primaire 101' forme une branche dont une extrémité est connectée au deuxième point de connexion P2 et dont l'autre extrémité est connectée à une borne extrémale, dite première borne extrémale, du premier bras A côté primaire. La première borne extrémale correspond à la borne du premier interrupteur QA1 qui n'est pas connectée à la première capacité C1.

En particulier, le premier circuit primaire 101 a une première inductance L11 en série avec une deuxième inductance L21. Notamment, la borne positive de la première inductance L11 est connectée au premier point de connexion P1 et la borne positive de la deuxième inductance L21 est connectée à la borne négative de la première inductance L11. En particulier, le deuxième circuit primaire 101' a une première inductance L11' en série avec une deuxième inductance L21'. Notamment, la borne négative de la première inductance L11' est connectée à la première borne extrémale du bras A côté primaire et la borne négative de la deuxième inductance L21' est connectée à la borne positive de la première inductance L11'. Notamment, les premières inductances L11, L11' des circuits primaires 101, 101' forment la première partie 111 de la partie primaire 110 du composant magnétique 100 ; et les deuxièmes inductances L21, L21' des circuits primaires 101, 101' forment la deuxième partie 112 de la partie primaire 110 du composant magnétique 100. Les premières inductances L11, L11' des circuits primaires 101, 101' sont parfaitement découplées des deuxièmes inductances L21, L21' des circuits primaires 101, 101'.

L'exemple de convertisseur DC/DC isolé 1 de la figure 6 a un fonctionnement similaire à celui illustré en figure 2.

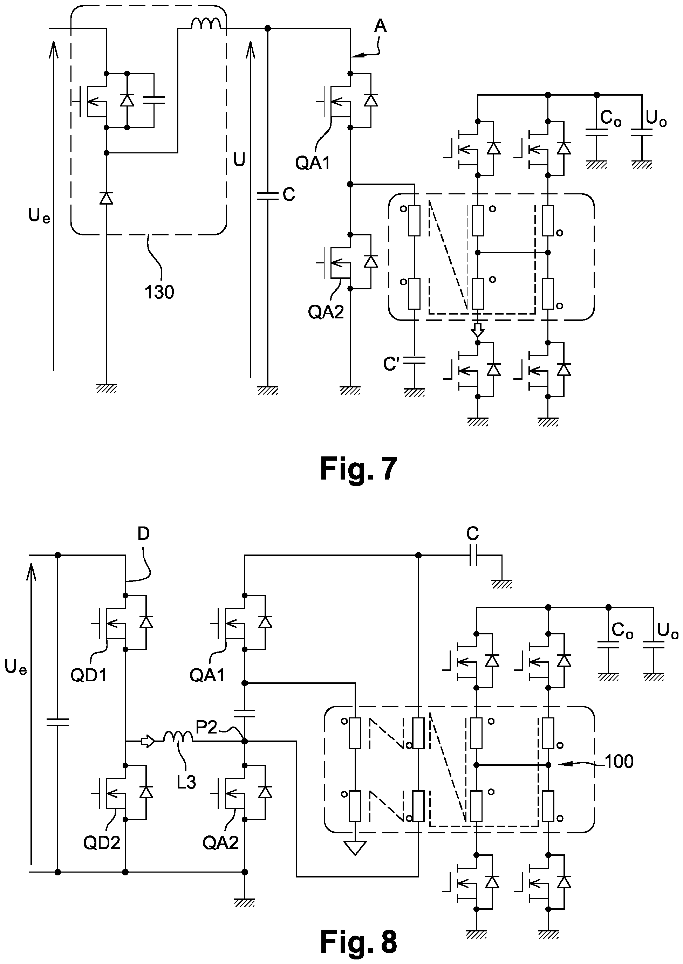

La figure 7 illustre un autre exemple similaire à celui de la figure 2, si ce n'est que les interrupteurs QA1, QA2 du premier bras A côté primaire sont configurés pour fonctionner avec un rapport cyclique sensiblement constant et que le convertisseur DC/DC isolé 1 comprend un circuit convertisseur de tension 130 configuré pour modifier la tension U délivrée au premier bras A côté primaire pour contrôler la tension Uo délivrée par le convertisseur de tension DC/DC isolé 1. Les interrupteurs QA1, QA2 fonctionnent avec un rapport cyclique qui ne varie pas, c'est-à-dire qui reste constant au cours du temps. Dans l'exemple de la figure 7, le circuit convertisseur de tension 130 est un circuit convertisseur abaisseur. Cependant, le circuit convertisseur de tension 130 pourrait être un circuit convertisseur élévateur, abaisseur-élévateur, ou bidirectionnel. En particulier le rapport cyclique du premier bras A côté primaire peut être égal à 50%. La tension U aux bornes du premier bras A côté primaire est régulée à une tension égale à 2N×Ue. A cette valeur de rapport cyclique, la chute de tension aux bornes des interrupteurs QB1, QB2, QC1, QC2 dans la partie secondaire 120 du convertisseur DC/DC isolé 1 a la même valeur pour tous les interrupteurs. Ainsi, les interrupteurs QC1, QC2 ouverts sur la première partie de fonctionnement et les interrupteurs QB1, QB2 ouverts sur le deuxième partie de fonctionnement ont la même chute de tension à leurs bornes. L'usure des interrupteurs côté secondaire est donc la même.

La figure 8 illustre un autre exemple de convertisseur DC/DC isolé 1. L'exemple de convertisseur DC/DC isolé 1 est similaire à celui illustré en figure 6, si ce n'est qu'il comprend en outre d'autres interrupteurs QD1, QD2 qui contrôlent la tension de sortie Uo du convertisseur DC/DC isolé 1 en contrôlant la tension vue par les interrupteurs QA1, QA2 du premier bras A côté primaire, le rapport cyclique des interrupteurs QA1, QA2 du premier bras A côté primaire restant constant. En particulier, les interrupteurs QD1, QD2 contrôlent la tension délivrée par les interrupteurs QA1, QA2 du premier bras A côté primaire, par exemple grâce à une ou des inductances L3 et/ou capacités auxquelles ils sont connectés. Notamment, cet exemple de convertisseur DC/DC isolé 1 comprend un deuxième bras D côté primaire d'interrupteurs en série. Le deuxième bras D côté primaire comprend deux interrupteurs QD1, QD2 qui sont directement en série. Un premier interrupteur QD1, dit interrupteur côté haut, est connecté à la borne haute d'une source de tension (non représentée) délivrant la tension d'entrée Ue. Un deuxième interrupteur QD2, dit interrupteur côté bas, est connecté à la deuxième borne extrémale du premier bras A côté primaire. Le deuxième interrupteur QD2 est en outre connecté à la borne basse de la source de tension. Cette borne basse correspond donc à la première masse GND1 du convertisseur DC/DC isolé 1. Chaque interrupteur QD1, QD2, peut comprendre un transistor en parallèle avec une diode de roue libre. Une inductance L3 a une première borne connectée au point milieu du deuxième bras D côté primaire, et une deuxième borne connectée au deuxième point de connexion P2. Une capacité C est connectée entre les bornes extrémales du premier bras A côté primaire.

Dans l'exemple illustré en figure 2, la transmission d'énergie à travers le composant magnétique 100 est contrôlée par les interrupteurs QA1,QA2 du premier bras A côté primaire. Dans l'exemple de convertisseur DC/DC isolé 1 illustré en figure 8, le deuxième bras D côté primaire permet également de contrôler cette transmission d'énergie. Les interrupteurs QA1, QA2 du premier bras A côté primaire fonctionnent avec un rapport cyclique qui ne varie pas. Lors du fonctionnement du convertisseur DC/DC isolé 1, la tension de sortie Uo est contrôlée par le courant circulant dans la troisième inductance L3. Ce courant est commandé par le deuxième bras D côté primaire. Les interrupteurs QD1, QD2 du deuxième bras D côté primaire sont commandés de sorte que le courant circulant dans la troisième inductance L3 permette d'obtenir une valeur de tension Uo souhaitée en sortie du convertisseur DC/DC isolé 1. Ainsi, il n'est pas nécessaire de faire varier le rapport cyclique des interrupteurs QA1, QA2 du premier bras A côté primaire. Le premier bras A peut donc fonctionner à son rapport cyclique le plus avantageux pour la transmission d'énergie par le composant magnétique 100, notamment à 50%. A un rapport cyclique de 50% dans le premier bras A côté primaire, comme expliqué précédemment en relation avec l'exemple de la figure 7, les interrupteurs QC1, QC2 ouverts sur la première partie de fonctionnement et les interrupteurs QB1, QB2 ouverts sur le deuxième partie de fonctionnement ont la même chute de tension à leurs bornes. L'usure des interrupteurs côté secondaire est donc la même.

Notamment, le composant magnétique 100 illustré en figure 2 peut être réalisé par deux transformateurs en série dans lesquels les secondaires sont reliés au niveau d'un point intermédiaire comme décrit précédemment. Alternativement, la partie primaire 110 du composant magnétique 100 peut être réalisée avec un seul enroulement couplé avec des enroulements secondaires réalisant les secondaires 120B, 120C, les secondaires étant reliés au niveau d'un point intermédiaire comme décrit précédemment.

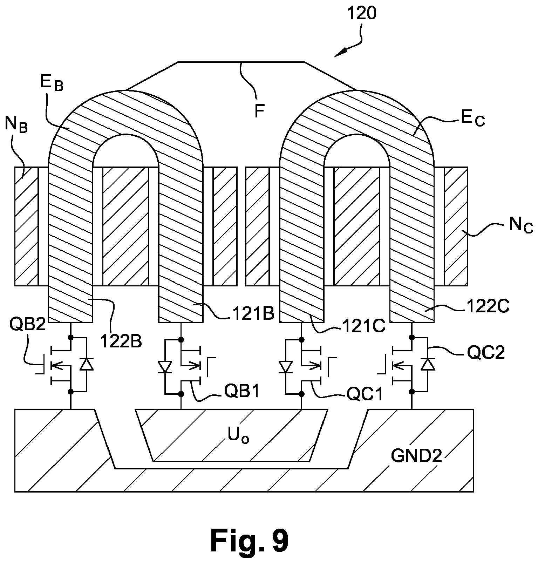

La figure 9 illustre un exemple d'implémentation de la partie secondaire 120 du composant magnétique 100 dans un exemple de convertisseur DC/DC isolé 1 selon l'invention. Un premier enroulement EB réalise le secondaire 120B du premier bras B côté secondaire. Un deuxième enroulement EC réalise le secondaire 120C du deuxième bras C côté secondaire. Les enroulements EB, EC sont enroulés sur des noyaux NB, BC respectifs par lesquels ils sont respectivement couplés magnétiquement à la première partie 111 de la partie primaire 110 et à la deuxième partie 120 de la partie primaire 110. Les enroulements EB, EC sont reliés entre eux par un fil F au niveau de leurs points intermédiaires.

Les interrupteurs du convertisseur DC/DC isolé 1 peuvent être des transistors, tels que des transistors MOSFET, IGBT, ou autres. Une partie, notamment la totalité, du convertisseur DC/DC isolé 1 peut être réalisée à partir d'un matériau semiconducteur tel que du silicium (Si), du nitrure de gallium (GaN), du carbure de silicium (SiC), ou tout autre matériau semiconduteur.

L'invention n'est pas limitée aux exemples décrits. En particulier, Dans les exemples illustrés, le premier bras A côté primaire et la partie primaire 110 du composant magnétique 100 forment une structure en demi-pont. Cependant, le premier bras A côté primaire et la partie primaire 110 pourraient former une structure en pont complet avec un quatrième bras d'interrupteurs en série. Les interrupteurs du quatrième bras sont par exemple identiques à ceux du premier bras A côté primaire.

## Revendications

1. Convertisseur DC/DC isolé (1) comprenant :
- un composant magnétique (100) ayant une partie primaire (110) et une partie secondaire (120) séparées par une barrière d'isolation électrique ;
- des interrupteurs (QA1, QA2), dits interrupteurs côté primaire, reliés à la partie primaire (110) du composant magnétique (100) de sorte que des commutations des interrupteurs côté primaire (QA1, QA2) avec un rapport cyclique (α) sur des périodes de modulation (T) permettent au composant magnétique (100) de transférer de l'énergie de la partie primaire (110) vers la partie secondaire (120) et de stocker de l'énergie au niveau de la partie primaire (110), pour convertir une tension d'entrée (Ue) du convertisseur DC/DC isolé (1) en une tension de sortie (Uo); et
dans lequel la partie secondaire (120) du composant magnétique (100) comprend un premier (B) et un deuxième bras (C), chaque bras (B,C) comportant dans l'ordre un premier interrupteur (QB1, QC1), un secondaire (120B, 120C) et un deuxième interrupteur en série (QB2, QC2) ; un point intermédiaire du secondaire (120B) du premier bras (B), dit premier secondaire, étant connecté à un point intermédiaire du secondaire (120C) du deuxième bras (C), dit deuxième secondaire.

2. Convertisseur (1) selon la revendication 1, dans lequel le composant magnétique (100) transfère de l'énergie vers un des deux secondaires (120B, 120C) en fonction de la tension appliquée au niveau de la partie primaire (110).

3. Convertisseur (1) selon la revendication 1 ou 2, dans lequel le composant magnétique (100) est configuré de sorte que :
- sur une première partie d'une période de modulation (T), une première partie (111) de la partie primaire (110) transfère une énergie vers le premier secondaire (120B), et une deuxième partie (112) de la partie primaire (110) réalise une inductance stockant de l'énergie ;
- sur une deuxième partie de la période de modulation (T), la deuxième partie (112) de la partie primaire (110) transfère une énergie vers le deuxième secondaire (120C), et la première partie (111) de la partie primaire (110) réalise une inductance stockant de l'énergie.

4. Convertisseur (1) selon la revendication précédente, dans lequel :
- les interrupteurs (QB1, QB2) du premier bras (B) sont configurés pour être passants sur la première partie de fonctionnement et ouverts sur la deuxième partie de fonctionnement ; et
- les interrupteurs (QC1, QC2) du deuxième bras (C) sont configurés pour être passants sur la deuxième partie de fonctionnement et ouverts sur la première partie de fonctionnement.

5. Convertisseur (1) selon l'une des revendications précédentes, dans lequel dans chaque bras (B, C) de la partie secondaire (120), les interrupteurs sont configurés pour être simultanément dans un même état et pour être dans un état différent de celui des interrupteurs de l'autre bras.

6. Convertisseur (1) selon l'une des revendications précédentes, dans lequel les extrémités des bras (B, C) de la partie secondaire (120) sont reliées entre elles, une première extrémité étant destinée à être connectée à la masse (GND2) de la partie secondaire (120), une deuxième extrémité étant destinée à être connectée à la sortie du convertisseur (1).

7. Convertisseur (1) selon l'une des revendications précédentes, dans lequel lesdits secondaires (120B, 120C) du composant magnétique (100) sont non couplés magnétiquement entre eux, lesdits secondaires (120B, 120C) étant couplés magnétiquement à la partie primaire (110).

8. Convertisseur (1) selon l'une des revendications précédentes, dans lequel les interrupteurs côté primaire (QA1, QA2) sont configurés pour fonctionner avec un rapport cyclique (α) sensiblement constant ; ledit convertisseur (1) comprenant au moins un autre interrupteur (QD1, QD2) configuré pour contrôler la tension de sortie du convertisseur DC/DC isolé en contrôlant la tension délivrée par lesdits interrupteurs côté primaire (QA1, QA2).

9. Convertisseur (1) selon la revendication précédente, dans lequel les interrupteurs côté primaire (QA1, QA2) sont configurés de sorte que leur rapport cyclique (α) est sensiblement égal à 50%.

10. Convertisseur (1) selon l'une des revendications précédentes, comprenant un détecteur de court-circuit (50), configuré pour :
- détecter un court-circuit d'un desdits interrupteurs côté secondaire (QB2, QC2) dans la partie secondaire (120) ;
- ouvrir l'autre interrupteur (QB1, QC1) du bras côté secondaire auquel appartient l'interrupteur en court-circuit de manière à neutraliser ce court circuit.

## Patentansprüche

1. Isolierter Gleichstrom-Gleichstrom-Umrichter (1), umfassend:
- eine magnetische Komponente (100) mit einem primären Abschnitt (110) und einem sekundären Abschnitt (120), die durch eine Spannungs-Isolationsbarriere getrennt sind;
- Schalter (QA1, QA2), bezeichnet als Primärseitenschalter, die mit dem primären Abschnitt (110) der magnetischen Komponente (100) derart verbunden sind, dass Umschaltungen der Primärseitenschalter (QA1, QA2) mit einem zyklischen Verhältnis (a) über Modulationsperioden (T) der magnetischen Komponente (100) erlauben, Energie von dem primären Abschnitt (110) an den sekundären Abschnitt (120) zu übertragen und Energie im Bereich des primären Abschnitts (110) zu speichern, um eine Eingangsspannung (Ue) des isolierten Gleichstrom-Gleichstrom-Umrichters (1) in eine Ausgangsspannung (Uo) umzuwandeln; und
wobei der sekundäre Abschnitt (120) der magnetischen Komponente (100) einen ersten (B) und einen zweiten Arm (C) umfasst, wobei jeder Arm (B, C) in der Reihenfolge einen ersten Schalter (QB1, QC1), einen Sekundären (120B, 120C) und einen zweiten Schalter in Reihe (QB2, QC2) aufweist; wobei ein Verbindungspunkt des Sekundären (120B) des ersten Arms (B), bezeichnet als erster Sekundärer, mit einem Verbindungspunkt des Sekundären (120C) des zweiten Arms (C), bezeichnet als zweiter Sekundärer, verbunden ist.

2. Umrichter (1) nach Anspruch 1, wobei die magnetische Komponente (100) Energie an einen der zwei Sekundären (120B, 120C) in Abhängigkeit von der im Bereich des primären Abschnitts (110) angelegten Spannung überträgt.

3. Umrichter (1) nach Anspruch 1 oder 2, wobei die magnetische Komponente (100) derart konfiguriert ist, dass:
- über einen ersten Abschnitt einer Modulationsperiode (T) ein erster Abschnitt (111) des primären Abschnitts (110) eine Energie an den ersten Sekundären (120B) überträgt und ein zweiter Abschnitt (112) des primären Abschnitts (110) eine Energie speichernde Induktanz realisiert;
- über einen zweiten Abschnitt der Modulationsperiode (T) der zweite Abschnitt (112) des primären Abschnitts (110) eine Energie an den zweiten Sekundären (120C) überträgt und der erste Abschnitt (111) des primären Abschnitts (110) eine Energie speichernde Induktanz realisiert.

4. Umrichter (1) nach vorangehendem Anspruch, wobei:
- die Schalter (QB1, QB2) des ersten Arms (B) konfiguriert sind, um über den ersten Funktionsabschnitt leitend und über den zweitem Funktionsabschnitt geöffnet zu sein; und
- die Schalter (QC1, QC2) des zweitens Arm (C) konfiguriert sind, um über den zweiten Funktionsabschnitt leitend und über den ersten Funktionsabschnitt geöffnet zu sein.

5. Umrichter (1) nach einem der vorangehenden Ansprüche, wobei in jedem Arm (B, C) des sekundären Abschnitts (120) die Schalter konfiguriert sind, um gleichzeitig im selben Zustand zu sein und um in einem anderen Zustand als der der Schalter des anderen Arms zu sein.

6. Umrichter (1) nach einem der vorangehenden Ansprüche, wobei die Enden der Arme (B, C) des sekundären Abschnitts (120) miteinander verbunden sind, wobei ein erstes Ende bestimmt ist, mit der Masse (GND2) des sekundären Abschnitts (120) verbunden zu sein und ein zweites Ende bestimmt ist, mit dem Ausgang des Umrichters (1) verbunden zu sein.

7. Umrichter (1) nach einem der vorangehenden Ansprüche, wobei die Sekundären (120B, 120C) der magnetischen Komponente (100) nicht magnetisch untereinander gekoppelt sind, wobei die Sekundären (120B, 120C) mit dem primären Abschnitt (110) magnetisch gekoppelt sind.

8. Umrichter (1) nach einem der vorangehenden Ansprüche, wobei die Primärseitenschalter (QA1, QA2) konfiguriert sind, um mit einem etwa konstanten zyklischen Verhältnis (a) zu funktionieren; wobei der Umrichter (1) mindestens einen anderen Schalter (QD1, QD2) umfasst, der konfiguriert ist, um die Ausgangsspannung des isolierten Gleichstrom-Gleichstrom-Umrichters durch Steuern der von den Primärseitenschaltern (QA1, QA2) bereitgestellten Spannung zu steuern.

9. Umrichter (1) nach vorangehendem Anspruch, wobei die Primärseitenschalter (QA1, QA2) derart konfiguriert sind, das ihr zyklisches Verhältnis (α) etwa gleich 50 % beträgt.

10. Umrichter (1) nach einem der vorangehenden Ansprüche, umfassend einen Kurzschlussdetektor (50), der konfiguriert ist, um:
- einen Kurzschluss von einem der Sekundärseitenschalter (QB2, QC2) in dem sekundären Abschnitt (120) zu ermitteln;
- den anderen Schalter (QB1, QC1) des sekundärseitigen Arms zu öffnen, zu dem der kurzgeschlossene Schalter gehört, um diesen Kurzschluss zu neutralisieren.

## Claims

1. Insulated DC/DC converter (1) comprising:
- a magnetic component (100) having a primary part (110) and a secondary part (120) separated by an electrical insulation barrier;
- switches (QA1, QA2), referred to as primary side switches, linked to the primary part (110) of the magnetic component (100) such that the switching of the primary side switches (QA1, QA2) with a duty cycle (a) over the modulation periods (T) allows the magnetic component (100) to transfer energy from the primary part (110) to the secondary part (120) and to store energy at the primary part (110), to convert an input voltage (Ue) of the insulated DC/DC converter (1) into an output voltage (Uo); and
in which the secondary part (120) of the magnetic component (100) comprises a first arm (B) and a second arm (C), each arm (B, C) comprising in order a first switch (QB1, QC1), a secondary (120B, 120C) and a second switch in series (QB2, QC2); an intermediate point of the secondary (120B) of the first arm (B), referred to as first secondary, being connected to an intermediate point of the secondary (120C) of the second arm (C), referred to as second secondary.

2. Converter (1) according to claim 1, wherein the magnetic component (100) transfers energy to one of the two secondaries (120B, 120C) according to the voltage applied at the primary part (110).

3. Converter (1) according to claim 1 or 2, wherein the magnetic component (100) is configured such that:
- over a first part of a modulation period (T), a first part (111) of the primary part (110) transfers an energy to the first secondary (120B), and a second part (112) of the primary part (110) produces an inductance storing energy;
- over a second part of the modulation period (T), the second part (112) of the primary part (110) transfers an energy to the second secondary (120C), and the first part (111) of the primary part (110) produces an inductance storing energy.

4. Converter (1) according to the preceding claim, wherein:
- the switches (QB1, QB2) of the first arm (B) are configured to be ON over the first functioning part and open over the second functioning part; and
- the switches (QC1, QC2) of the second arm (C) are configured to be ON over the second functioning part and open over the first functioning part.

5. Converter (1) according to one of the preceding claims, wherein in each arm (B, C) of the secondary part (120), the switches are configured to be simultaneously in a same state and to be in a different state from that of the switches of the other arm.

6. Converter (1) according to one of the preceding claims, wherein the ends of the arms (B, C) of the secondary part (120) are linked to each other, a first end being configured to be connected to the ground (GND2) of the secondary part (120), a second end being configured to be connected to the output of the converter (1).

7. Converter (1) according to one of the preceding claims, wherein said secondaries (120B, 120C) of the magnetic component (100) are not magnetically coupled to each other, said secondaries (120B, 120C) being magnetically coupled to the primary part (110).

8. Converter (1) according to one of the preceding claims, wherein the primary side switches (QA1, QA2) are configured to function with a substantially constant duty cycle (α); said converter (1) comprising at least one other switch (QD1, QD2) configured to control the output voltage of the insulated DC/DC converter by controlling the voltage delivered by said primary side switches (QA1, QA2).

9. Converter (1) according to the preceding claim, wherein the primary side switches (QA1, QA2) are configured such that the duty cycle (a) thereof is substantially equal to 50%.

10. Converter (1) according to one of the preceding claims, comprising a short-circuit detector (50), configured to:
- detect a short-circuit in one of said secondary side switches (QB2, QC2) in the secondary part (120);
- open the other switch (QB1, QC1) of the secondary side arm to which the short-circuit switch belongs so as to neutralise this short-circuit.
